# FASCICULE DE BREVET EUROPEEN

(11) **EP 3 390 957 B1**
(45) Date de publication et mention de la délivrance du brevet: **09.02.2022**
(21) Numéro de dépôt: 16809788.9
(22) Date de dépôt: 08.12.2016
(51) Int. Cl.: F42B 3/12, F42B 3/198

(54) **ALLUMEUR PYROTECHNIQUE**
PYROTECHNISCHER ZÜNDER
PYROTECHNICAL IGNITER

(30) Priorité: 15.12.2015 FR 1562369
(43) Date de publication de la demande: 24.10.2018
(73) Titulaire: Autoliv Development AB, 447 83 Vårgårda (SE)
(72) Inventeur: COURTAUX, Valérian, 92500 Rueil-Malmaison (FR); CHEVALIER, Hervé, 95290 L'Isle-Adam (FR)
(74) Mandataire: Vigand, Philippe
(86) Numéro de dépôt international: PCT/EP2016/080342
(87) Numéro de publication internationale: WO 2017/102564

(56) Documents cités:
- EP-A1- 1 489 376
- WO-A1-2006/045726
- US-A1- 2006 017 269

## Description

La présente invention concerne de manière générale un allumeur pyrotechnique, et en particulier un allumeur électro-pyrotechnique comprenant un évent latéral, pour éjecter des gaz chauds et des particules chaudes sur un côté de l'allumeur. Un tel allumeur est typiquement utilisé dans un générateur de gaz pour un système de sécurité automobile, tel qu'un airbag par exemple.

Il est connu dans l'art antérieur des allumeurs avec un évent latéral sur l'étui métallique contenant la matière pyrotechnique, tel que celui décrit par exemple dans le document WO2006045726A1. Cependant, l'évent latéral est généralement réalisé par une opération de frappe, ce qui déforme l'étui et peut ensuite provoquer des problèmes avec le capuchon plastique qui recouvre l'étui métallique pour l'isoler. En effet, il peut être alors difficile d'enfiler le capuchon plastique sur l'étui en raison des variations de formes et de dimensions si le jeu entre étui métallique et capuchon est faible. Si par contre le jeu entre étui métallique et capuchon est plus important, du plastique liquide peut pénétrer ou s'infiltrer entre l'étui métallique et le capuchon et/ou entre le capuchon et le moule de fabrication lors d'une opération de surmoulage. Des problèmes de qualité et de fabrication apparaissent alors (rebuts d'aspect, rebuts dimensionnels, et rebuts fonctionnels, temps de cycle augmenté pour cause d'allumeur bloqué dans le moule d'injection).

Le document EP 1 489 376 A1 divulgue un allumeur avec un étui ayant une portion conique.

Un but de la présente invention est de répondre aux inconvénients des documents de l'art antérieur mentionnés ci-dessus et en particulier, tout d'abord, de proposer un allumeur électro-pyrotechnique avec un étui métallique qui comprend au moins un évent radial, et qui soit facile à fabriquer sans provoquer de rebuts ou d'arrêts de fabrication.

Pour cela un premier aspect de l'invention concerne un allumeur électro-pyrotechnique selon la revendication 1. L'étui métallique présente un épaulement (ou un élargissement, évasement, une augmentation de diamètre ou encore une réduction de diamètre) entre son extrémité ouverte, c'est dire l'extrémité par laquelle est chargée la matière pyrotechnique, et la zone où l'évent est positionné, ce qui permet de garantir que les déformations imposées à l'étui lors de la fabrication de l'évent ne vont pas affecter l'extrémité ouverte, puisque les diamètres sont différents (les déformations liées à la frappe de l'évent restent "confinées" dans la zone de l'étui avec petit diamètre, car l'épaulement ou évasement peut être apparenté à une nervure qui augmente la rigidité). On peut alors ajuster au plus juste le capuchon sur la zone non déformée de l'étui de manière répétable, de sorte à ce qu'il n'y ait pas de d'infiltrations de plastique lors du surmoulage (entre le capuchon et l'étui métallique, ou entre le capuchon et le moule de fabrication), tout en assurant le montage bien que les jeux soient faibles ou même nuls. Autrement dit, l'épaulement de l'étui métallique permet de garantir qu'une zone au niveau de l'extrémité ouverte de l'étui, ou à tout le moins une zone entre l'épaulement et l'extrémité ouverte de l'étui (qui pourrait présenter un diamètre plus petit que l'épaulement), sera dimensionnellement répétable pour pouvoir y enfiler un capuchon qui est surmoulé ensuite, le tout sans fuites, remontées ou infiltrations de plastique, même si l'étui métallique est déformé ou dimensionnellement non répétable au niveau de l'évent latéral. L'évent est une partie de l'étui, initialement fermée et liée à l'étui, agencée pour s'ouvrir à une pression prédéterminée lorsque la matière pyrotechnique est mise à feu et ainsi dé-confiner l'allumeur.

Comme expliqué ci-dessus, avant la fabrication de l'allumeur, le capuchon est un composant indépendant du surmoulage et de l'étui. L'épaulement permet de garantir que le capuchon peut être aisément déposé au dessus de l'étui métallique sans que du plastique surmoulé ne puisse s'insérer ultérieurement entre le capuchon et l'étui.

Avantageusement, l'évent est une partie de l'étui, agencée pour rester solidaire de l'étui après ouverture. Autrement dit, la zone de faiblesse qui préforme l'évent comprend au moins une ligne ouverte.

En d'autres termes, l'étui métallique présente un défaut géométrique, par rapport à une dimension nominale comme par exemple un diamètre, au niveau des évents supérieur à un défaut géométrique, par rapport à une dimension nominale comme par exemple un diamètre, au niveau de la portion de l'étui entre l'extrémité ouverte et l'épaulement.

Autrement dit, la demanderesse a constaté que l'épaulement permet de compenser un défaut géométrique, par rapport à une dimension nominale comme par exemple un diamètre, au niveau des évents supérieur à 0.7% de la dimension nominale, voire supérieur à 1% de la dimension nominale, voire supérieur à 1.5% de la dimension nominale. Par exemple, si l'étui présente un diamètre nominal, le diamètre circonscrit de l'étui au niveau de l'évent une fois ce dernier formé, peut être supérieur de 0.7%, voire supérieur à 1%, voire supérieur de 1.5% au diamètre nominal.

Il est entendu que l'évent n'est pas ouvert tant que l'allumeur n'a pas fonctionné. Par contre, il est visible car un tel évent est formé par une ligne droite ou courbe formant une zone de faiblesse dans la paroi latérale de l'étui métallique.

Avantageusement, l'étui présente une direction axiale formant un axe, et une projection de la zone de faiblesse, sur un plan de projection comprenant l'axe de l'étui, forme une ligne courbe. Ce type de zone de faiblesse engendre plus de défauts sur l'étui lors de sa réalisation par une opération de frappe qu'une ligne droite.

Avantageusement, l'évent est formé sur une surface latérale de l'étui initialement cylindrique.

Avantageusement, l'évent est formé sur une première portion initialement cylindrique de la surface latérale de l'étui, dont le diamètre initial est inférieur à celui d'une deuxième portion de la surface latérale de l'étui, située de l'autre côté de l'épaulement, qui sert de surface de positionnement pour recevoir le capuchon. En d'autres termes, le capuchon est reçu et positionné avant surmoulage sur la deuxième portion cylindrique de la surface latérale. La deuxième portion cylindrique est plus précise que la première portion cylindrique, car elle en est séparée par l'épaulement. Il n'y a pas de contre dépouille, ce qui permet de garantir des composants simples à fabriquer et à assembler.

Avantageusement, le diamètre circonscrit de l'étui au niveau des évents est inférieur de moins de 10% au diamètre circonscrit de l'étui en regard de l'extrémité du capuchon recouverte par le surmoulage. Préférentiellement, le diamètre circonscrit de l'étui au niveau des évents est inférieur de moins de 5%. Encore plus préférentiellement le diamètre circonscrit de l'étui au niveau des évents est inférieur de moins de 2%.

Avantageusement, la paroi latérale comprend au moins un méplat. On peut envisager que la paroi de l'étui métallique comprenne plusieurs méplats, par exemple deux, trois, quatre ou cinq méplats, et dans ce cas, l'épaulement ou élargissement permet de passer de la zone où sont implantés le ou les méplats (donc de section transversale non circulaire) à la zone où sera surmoulé le capuchon, de section circulaire.

Avantageusement, ledit au moins un évent est agencé sur ledit au moins un méplat.

Avantageusement, un diamètre circonscrit de l'étui métallique au niveau de l'extrémité du capuchon est supérieur à un diamètre circonscrit de l'étui métallique au niveau dudit au moins un évent. Le procédé de fabrication est facilité, car le début de l'enfilage du capuchon sur le petit diamètre bénéficie d'un jeu important.

Avantageusement, un diamètre circonscrit de l'étui métallique au niveau de l'extrémité du capuchon est inférieur à un diamètre circonscrit de l'étui métallique au niveau dudit au moins un évent. On peut envisager une réduction de diamètre. Selon un mode de réalisation particulier, on peut également envisager que le capuchon plastique comprend une collerette élastique qui forme l'extrémité, et qui se déforme pour permettre d'enfiler le capuchon sur l'étui, et se remet en position lorsqu'elle passe l'épaulement.

Selon l'invention, ledit au moins un évent de l'étui métallique est défini par une zone de matière amincie. La zone amincie peut alors former une ligne de rupture préférentielle droite ou courbe, afin de garantir que l'ouverture se fasse toujours au bon endroit.

Selon l'invention, ledit au moins un évent de l'étui métallique est obtenu par une opération de frappe. Une telle opération est typiquement réalisée avec une matrice et un poinçon, de manière économique, rapide et répétable.

Avantageusement, l'étui métallique comprend un fond et une paroi latérale. En d'autres termes, l'étui métallique présente une forme de Dé ou de coupe avec la paroi latérale agencée entre le fond et une ouverture de l'étui. La paroi latérale est alors typiquement cylindrique, on peut envisager un angle de dépouille pour éjecter facilement l'étui lors de sa fabrication par emboutissage. Avantageusement, l'étui métallique présente une symétrie de révolution autour d'un axe.

Avantageusement, le capuchon plastique recouvre le fond et la partie latérale de l'étui, au moins jusqu'au surmoulage. L'isolation électrique de l'étui métallique est alors complète.

Avantageusement, l'allumeur électro-pyrotechnique comprend une traversée hermétique, par exemple du type verre-métal, agencée pour isoler deux portions de circuit électrique l'une de l'autre, et l'étui métallique est soudé, par exemple par transparence, sur la traversée hermétique. Typiquement, les portions de circuit électrique à isoler l'une de l'autre sont les pattes ou broches de connexion de l'allumeur. On peut prévoir une pièce intermédiaire métallique entre la traversée hermétique et l'étui métallique, elle aussi fixée par soudure.

Selon l'invention, le capuchon présente un premier jeu avec l'étui métallique au niveau de la zone où est implanté ledit au moins un évent, un deuxième jeu avec l'étui métallique au niveau de la zone de fixation, inférieur ou même strictement inférieur au premier jeu.

Avantageusement, le deuxième jeu est positif ou nul.

Le premier jeu, assez important permet de compenser les déformations au niveau de l'évent radial ou latéral, c'est à dire que le jeu évite une déformation du capuchon par l'étui au niveau de l'évent radial, pour un montage aisé du capuchon sur l'étui, et le deuxième jeu, assez faible ou nul, permet de limiter les insertions ou remontées de plastique entre le capuchon et l'étui ou l'outil de fabrication, lors de l'opération de surmoulage.

Avantageusement, le premier jeu au rayon est compris dans une gamme allant de 0.15mm à 0.35mm.

Un deuxième aspect de l'invention concerne un étui métallique selon la revendication 7.

Un troisième aspect de l'invention concerne un dispositif de sécurité automobile tel qu'un module airbag, comprenant au moins un allumeur selon le premier aspect de l'invention.

Un quatrième aspect de l'invention concerne un véhicule automobile comprenant au moins un allumeur selon le premier aspect de l'invention.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue en coupe d'un étui métallique pour un allumeur selon la présente invention ;
- la figure 2 représente une vue en coupe d'un allumeur selon l'invention, comprenant l'étui métallique de la figure 1.

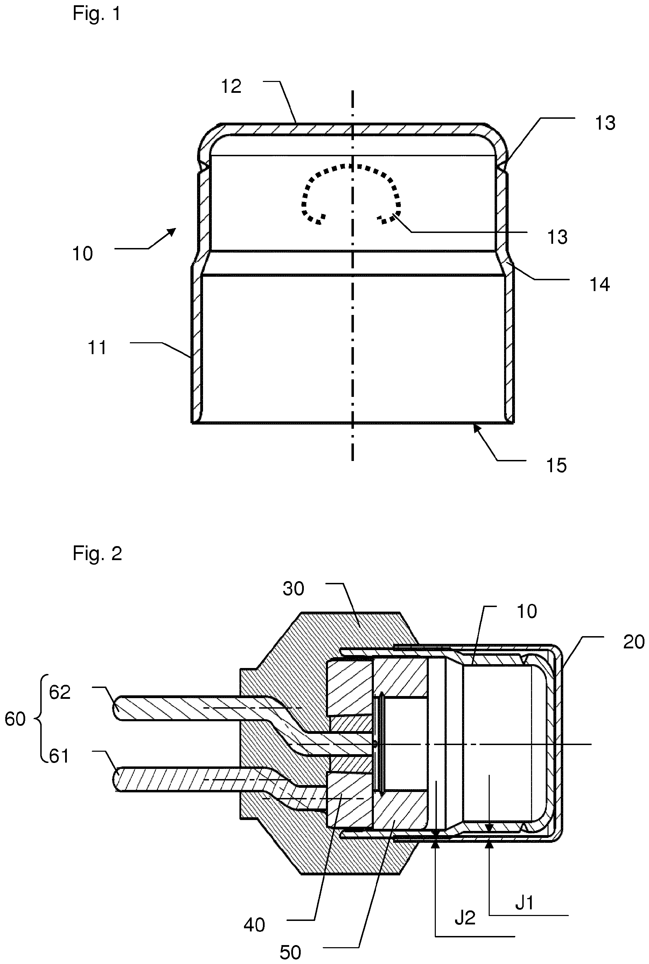

La figure 1 représente un étui d'allumeur 10 de forme générale cylindrique avec une paroi latérale 11 qui présente une extrémité ouverte 15, et une extrémité fermée avec un fond 12.

Sur la paroi latérale 11, plusieurs évents 13 sont formés par des lignes de faiblesse où l'épaisseur de la paroi latérale est fortement réduite et définir des zones d'ouvertures privilégiés lorsque la pression à l'intérieur de l'étui métallique 10 augmente.

Enfin, un épaulement 14 de la paroi latérale 11 est prévu entre l'extrémité ouverte 15 et les évents 13. En conséquence, la paroi latérale 11 présente deux portions de cylindres coaxiaux (séparées par l'épaulement 14), et sur le cylindre de petit diamètre, proche du fond, des évents 13 sont formés. On entend par cylindre une forme qui présente une ligne de base, parcourue par des génératrices parallèles. Le petit diamètre peut présenter un diamètre de 12.4mm alors que le grand peut présenter un diamètre de 12.6mm.

On peut aussi dire que le diamètre de l'étui 10 entre l'extrémité ouverte 15 et l'épaulement 14 est supérieur au diamètre de l'étui 10 au niveau des évents, et en particulier que le diamètre circonscrit de l'étui 10 entre l'extrémité ouverte 15 et l'épaulement 14 est supérieur au diamètre circonscrit de l'étui 10 au niveau des évents.

La figure 2 présente quant à elle un allumeur électro-pyrotechnique qui comprend l'étui métallique 10. Ce dernier peut être fixé sur une traversée hermétique 40 du type verre-métal. L'allumeur électro-pyrotechnique comprend un tube de chargement 50 qui peut définir un puits de chargement, et l'étui métallique 10 contient une ou plusieurs matières pyrotechniques, non représentée(s).

La traversée hermétique 40 a pour fonction principale d'isoler électriquement l'une de l'autre deux broches de connexion 61 et 62 d'une interface de connexion 60, pour forcer un courant de mise à feu à passer par un pont résistif agencé entre les broches de connexion 61 et 62.

La broche 61 est directement reliée à une partie métallique de la traversée hermétique et tout élément métallique de l'allumeur tel que l'étui métallique 10 doit être isolé électriquement pour éviter tout risque de mise à feu intempestive. A cet effet, l'étui métallique 10 est recouvert par un capuchon 20 en matière plastique par exemple, et par un surmoulage plastique 30 qui recouvre le reste de l'étui métallique 10, ainsi qu'une extrémité du capuchon 20.

Lors de l'opération de surmoulage, il est important d'empêcher des infiltrations ou injections de plastique liquide entre l'étui métallique 10 et le capuchon 20 et/ou l'outil de moulage lui même, pour éviter des blocages de l'allumeur électro-pyrotechnique dans le moule, des rebuts d'aspects, ou des rebuts dimensionnels. Il est donc important d'avoir un bon ajustement entre l'étui métallique 10 et le capuchon 20, au niveau de l'extrémité du capuchon 20.

Cependant, en raison de l'opération de fabrication des évents 13, il est fréquent que cette opération déforme l'étui métallique 10. Afin de limiter l'influence de cette ou ces déformations, l'invention prévoit le l'épaulement 14, pour avoir un diamètre de l'étui métallique 10 au niveau de la zone de surmoulage du capuchon supérieur au diamètre de la zone où sont implantés les évents 13. Ainsi les déformations n'influencent pas le grand diamètre, et on peut prévoir un ajustement précis du capuchon 20 sur l'étui métallique 10, avec un jeu faible pour limiter les infiltrations de plastique entre capuchon 20 et étui métallique 10, ou le moule de fabrication.

De plus, cette mise en œuvre permet de prévoir un premier jeu J1 entre le capuchon 20 et l'étui métallique 10 au niveau de la zone où sont implanté les évents 13 et un deuxième jeu J2 entre le capuchon 20 et l'étui métallique 10 au niveau de la zone de fixation, le deuxième jeu étant positif ou nul, et inférieur au premier jeu.

Par exemple on peut prévoir un deuxième jeu au rayon J2 nul voir même un montage légèrement serré du capuchon 20 sur le grand diamètre de l'étui métallique 10, où est positionnée l'extrémité du capuchon 20. Dans ce cas, le jeu négatif peut être compris entre 0 et 0.1mm au rayon (il s'agit donc d'un serrage). Au niveau des évents 13, on peut prévoir par exemple un premier jeu au rayon J1 compris entre 0.10mm et 0.40mm, ou compris entre 0.15mm et 0.35mm. Cela permet de monter sans risque d'interférence le capuchon 20 sur l'étui métallique 10, même si ce dernier est légèrement déformé au niveau des évents 13.

Avec cette mise en œuvre, lors du montage du capuchon 20 sur l'étui métallique 10, le premier jeu J1 permet un passage aisé, et le deuxième jeu J2 garantit que le capuchon 20 se déformera peu ou pas du tout lors de l'opération de surmoulage, avec un bon ajustement entre l'étui métallique 10, le capuchon 20 et le moule de fabrication, ce qui réduit le risque d'infiltration ou remontées de plastique liquide.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées. En particulier, il est prévu de monter le capuchon sur l'étui métallique avec un jeu J2 nul ou très légèrement négatif.

## Revendications

1. Allumeur électro-pyrotechnique comprenant :
- un étui métallique (10) contenant de la matière pyrotechnique, comprenant au moins un évent (13) sur une paroi latérale (11),
- un capuchon (20) en matière isolante de l'électricité recouvrant l'étui métallique (10) au moins au niveau dudit au moins un évent (13),
- un surmoulage plastique (30) recouvrant au moins une extrémité du capuchon (20),
- l'étui métallique (10) comprend au moins un épaulement (14) agencé entre l'évent (13) latéral et une zone de l'étui métallique (10) en regard de l'extrémité du capuchon (20) recouverte par le surmoulage,
- ledit au moins un évent (13) de l'étui métallique (10) est défini par une zone de matière amincie,
**caractérisé en ce que** :
ledit au moins un évent (13) de l'étui métallique (10) est obtenu par une opération de frappe,
le capuchon (20) présente un premier jeu avec l'étui métallique (10) au niveau de la zone où est implanté ledit au moins un évent (13), un deuxième jeu avec l'étui métallique (10) au niveau de la zone de fixation, inférieur au premier jeu.

2. Allumeur électro-pyrotechnique selon la revendication précédente, dans lequel un diamètre circonscrit de l'étui métallique (10) au niveau de l'extrémité du capuchon (20) est supérieur à un diamètre circonscrit de l'étui métallique (10) au niveau dudit au moins un évent (13).

3. Allumeur électro-pyrotechnique selon la revendication 1, dans lequel un diamètre circonscrit de l'étui métallique (10) au niveau de l'extrémité du capuchon (20) est inférieur à un diamètre circonscrit de l'étui métallique (10) au niveau dudit au moins un évent (13).

4. Allumeur électro-pyrotechnique selon l'une des revendications précédentes, dans lequel l'étui métallique (10) comprend un fond (12) et une paroi latérale (11).

5. Allumeur électro-pyrotechnique selon l'une des revendications précédentes, dans lequel l'étui métallique (10) est soudé sur la traversée hermétique.

6. Allumeur électro-pyrotechnique selon l'une des revendications précédentes, dans lequel le premier jeu au rayon est compris dans une gamme allant de 0.15mm à 0.35mm.

7. Etui métallique pour un allumeur selon l'une des revendications précédentes, dans lequel :
l'étui l'étui métallique (10) est agencé pour contenir de la matière pyrotechnique, et comprend au moins un évent (13) sur une paroi latérale (11),
l'étui métallique (10) comprend au moins un épaulement (14) agencé entre l'évent (13) latéral et une zone de l'étui métallique (10) destinée à être en regard de l'extrémité du capuchon (20) recouverte par le surmoulage,
ledit au moins un évent (13) de l'étui métallique (10) est défini par une zone de matière amincie,
ledit au moins un évent (13) de l'étui métallique (10) est obtenu par une opération de frappe,
l'étui métallique (10) est agencé pour présenter un premier jeu avec le capuchon (20) au niveau de la zone où est implanté ledit au moins un évent (13), un deuxième jeu avec le capuchon (20) au niveau de la zone de fixation, inférieur au premier jeu.

8. Dispositif de sécurité automobile comprenant au moins un allumeur selon l'une des revendications 1 à 6.

9. Véhicule automobile comprenant au moins un allumeur selon l'une des revendications 1 à 6.

## Patentansprüche

1. Elektro-pyrotechnischer Zünder, umfassend:
- ein Metallgehäuse (10), das pyrotechnisches Material enthält und mindestens eine Entlüftungsöffnung (13) an einer Seitenwand (11) umfasst,
- eine Kappe (20) aus elektrisch isolierendem Material, die das Metallgehäuse (10) mindestens auf der Höhe der mindestens einen Entlüftungsöffnung (13) abdeckt,
- eine Kunststoffüberformung (30), die mindestens ein Ende der Kappe (20) abdeckt,
- wobei das Metallgehäuse (10) mindestens eine Schulter (14) umfasst, die zwischen der seitlichen Entlüftungsöffnung (13) und einer Zone des Metallgehäuses (10) angeordnet ist, der dem Ende der Kappe (20) zugewandt ist, die von der Überformung abgedeckt wird,
- wobei die mindestens eine Entlüftungsöffnung (13) des Metallgehäuses (10) durch eine Zone aus verdünntem Material definiert ist,
**dadurch gekennzeichnet, dass**:
die mindestens eine Entlüftungsöffnung (13) des Metallgehäuses (10) durch einen Schlagvorgang erhalten wird,
die Kappe (20) in der Zone, in der die mindestens eine Entlüftungsöffnung (13) eingesetzt ist, einen ersten Spalt mit dem Metallgehäuse (10) und in der Befestigungszone einen zweiten Spalt mit dem Metallgehäuse (10) aufweist, der kleiner als der erste Spalt ist.

2. Elektro-pyrotechnischer Zünder nach dem vorhergehenden Anspruch, wobei ein umschriebener Durchmesser des Metallgehäuses (10) an dem Ende der Kappe (20) größer als ein umschriebener Durchmesser des Metallgehäuses (10) an der mindestens einen Entlüftungsöffnung (13) ist.

3. Elektro-pyrotechnischer Zünder nach Anspruch 1, wobei ein umschriebener Durchmesser des Metallgehäuses (10) an dem Ende der Kappe (20) kleiner als ein umschriebener Durchmesser des Metallgehäuses (10) an der mindestens einen Entlüftungsöffnung (13) ist.

4. Elektro-pyrotechnischer Zünder nach einem der vorhergehenden Ansprüche, wobei das Metallgehäuse (10) einen Boden (12) und eine Seitenwand (11) umfasst.

5. Elektro-pyrotechnischer Zünder nach einem der vorhergehenden Ansprüche, wobei das Metallgehäuse (10) mit der hermetischen Durchführung verschweißt ist.

6. Elektro-pyrotechnischer Zünder nach einem der vorhergehenden Ansprüche, wobei der erste Radiusspalt in einem Bereich von 0,15 mm bis 0,35 mm liegt.

7. Metallgehäuse für einen Zünder nach einem der vorhergehenden Ansprüche, wobei:
das Metallgehäuse (10) angeordnet ist, um pyrotechnisches Material zu enthalten, und mindestens eine Entlüftungsöffnung (13) an einer Seitenwand (11) umfasst,
das Metallgehäuse (10) mindestens eine Schulter (14) umfasst, die zwischen der seitlichen Entlüftungsöffnung (13) und einer Zone des Metallgehäuses (10) angeordnet ist, die dazu bestimmt ist, dem Ende der Kappe (20) gegenüberzuliegen, die von der Überformung abgedeckt ist, wobei die mindestens eine Entlüftungsöffnung (13) des Metallgehäuses (10) durch eine Zone aus verdünntem Material definiert ist,
die mindestens eine Entlüftungsöffnung (13) des Metallgehäuses (10) durch einen Prägevorgang erhalten wird,
das Metallgehäuse (10) angeordnet ist, um einen ersten Spalt mit der Kappe (20) in der Zone, in der die mindestens eine Entlüftungsöffnung (13) eingesetzt ist, und einen zweiten Spalt mit der Kappe (20) in der Befestigungszone aufzuweisen, der kleiner als der erste Spalt ist.

8. Kraftfahrzeugsicherheitsvorrichtung, umfassend mindestens einen Zünder nach einem der Ansprüche 1 bis 6.

9. Kraftfahrzeug, umfassend mindestens einen Zünder nach einem der Ansprüche 1 bis 6.

## Claims

1. Electro-pyrotechnic igniter comprising:
- a metal case (10) containing pyrotechnic material, comprising at least one vent (13) on a side wall (11),
- a cap (20) made of electrically insulating material which covers the metal case (10) at least in the region of said at least one vent (13),
- a plastic overmolding (30) covering at least one end of the cap (20),
- the metal case (10) comprises at least one shoulder (14) arranged between the side vent (13) and a region of the metal case (10) opposite the end of the cap (20) covered by the overmolding,
- said at least one vent (13) of the metal case (10) is defined by a region of thinned material,
**characterized in that**:
said at least one vent (13) of the metal case (10) is obtained by a striking operation,
the cap (20) has a first clearance with the metal case (10) in the region in which said at least one vent (13) is located, and a second clearance with the metal case (10) in the fastening region, which is smaller than the first clearance.

2. Electro-pyrotechnic igniter according to the preceding claim, wherein a circumscribed diameter of the metal case (10) in the region of the end of the cap (20) is greater than a circumscribed diameter of the metal case (10) in the region of said at least one vent (13).

3. Electro-pyrotechnic igniter according to claim 1, wherein a circumscribed diameter of the metal case (10) at the end of the cap (20) is smaller than a circumscribed diameter of the metal case (10) in the region of said at least one vent (13).

4. Electro-pyrotechnic igniter according to any of the preceding claims, wherein the metal case (10) comprises a base (12) and a side wall (11).

5. Electro-pyrotechnic igniter according to any of the preceding claims, wherein the metal case (10) is welded to the hermetic feed-through.

6. Electro-pyrotechnic igniter according to any of the preceding claims, wherein the first radial clearance is in a range of from 0.15 mm to 0.35 mm.

7. Metal case for an igniter according to any of the preceding claims, wherein:
the metal case (10) is designed to contain pyrotechnic material, and comprises at least one vent (13) on a side wall (11),
the metal case (10) comprises at least one shoulder (14) arranged between the side vent (13) and a region of the metal case (10) intended to be opposite the end of the cap (20) covered by the overmolding, and said at least one vent (13) of the metal case (10) is defined by a region of thinned material,
said at least one vent (13) of the metal case (10) is obtained by a striking operation,
the metal case (10) is arranged so as to have a first clearance with the cap (20) in the region in which said at least one vent (13) is located, and a second clearance with the cap (20) in the fastening region, which is smaller than the first clearance.

8. Motor vehicle safety device comprising at least one igniter according to any of claims 1 to 6.

9. Motor vehicle comprising at least one igniter according to any of claims 1 to 6.
